Europäisches Patentamt

European Patent Office

Office européen des brevets

(19)

(11) Publication number: **0 317 185 B1**

# EUROPEAN PATENT SPECIFICATION

(12)

(45) Date of publication of patent specification: **16.09.92**  (51) Int. Cl.⁵: **C09D 163/00**, C08G 59/42

(21) Application number: **88310630.4**

(22) Date of filing: **11.11.88**

(54) **Coating compositions based on polyepoxides and urethane-containing polyacid curing agents.**

(30) Priority: **13.11.87 US 120271**

(43) Date of publication of application:
**24.05.89 Bulletin 89/21**

(45) Publication of the grant of the patent:
**16.09.92 Bulletin 92/38**

(84) Designated Contracting States:
**BE DE ES FR GB IT NL SE**

(56) References cited:
**EP-A- 0 212 457**
**US-A- 3 419 510**

(73) Proprietor: **PPG INDUSTRIES, INC.**
**One PPG Place**
**Pittsburgh Pennsylvania 15272(US)**

(72) Inventor: **Chang, Wen-Hsuan**
**504 Edgehill Drive**
**Gibsonia Pennsylvania 15044(US)**
Inventor: **Dufford, Edward Lee**
**837 Sarver Road**
**Sarver Pennsylvania 16055(US)**
Inventor: **Klanica, Joseph Andrew**
**105 Orchard Drive**
**Sarver Pennsylvania 16055(US)**

(74) Representative: **Taylor, Phillip Kenneth et al**
**W.P. THOMPSON & CO. Coopers Building**
**Church Street**
**Liverpool L1 3AB(GB)**

## Description

The present invention relates to coating compositions, more particularly coating compositions suitable for use as automotive topcoats, especially as clear coats in a color-clear composite coating.

Color-plus-clear coatings involve the application of a colored or pigmented basecoat to a substrate followed by the application of a transparent to clear topcoat to the basecoat and are becoming increasingly popular as original finishes for automobiles. The color-plus-clear coatings have outstanding gloss and distinctness of image, and the clear coat is particularly important for these properties. Two-pack clear coat compositions comprising polyols such as polyester polyols, polyurethane polyols and acrylic polyols and polyisocyanate curing agents have been the standard in the industry and give outstanding gloss and distinctness of image. However, two-pack compositions containing polyisocyanate curing agents are difficult to handle, being sensitive to moisture and require cumbersome safety precautions.

It is an object of the present invention to provide a color-plus-clear coating system which avoids the problems of the polyisocyanate curing agents but which provides a finish which has outstanding gloss and distinctness of image.

It has been proposed in U.S. Patent 3,419,510 to prepare carboxyl terminated polyesters useful in the preparation of coatings based upon epoxidized fatty esters by reacting a polyisocyanate with an excess of polyol containing on the average more than two and preferably from 2.2 to 4.0 hydroxyl groups per molecule to form a hydroxyl-terminated polyurethane and then reacting the hydroxyl-terminated polyurethane with a polycarboxylic acid such that the overall ratio of carboxyl groups to hydroxyl groups in the reaction components is from 1.2 to 3.0 and preferably from 1.5 to 2.2. U.S. Patent No. 4,650,718 discloses coating compositions suitable for use as clear coats in a composite colour-clear coating. The resinous binder in the coating composition is a polyepoxide and a polyacid curing agent. Among the polyacid curing agents which may be used include carboxylic acid group-containing polymers such as acrylic polymers, polyesters, polyurethanes, oligomers such as ester group-containing oligomers and monomers. There is no suggestion in these references, however, of forming polyacid curing agents of the specific type set forth in the claims of the present invention which have been found to provide excellent degrees of cure while maintaining relatively high solids content in the coating composition.

In accordance with the present invention, a coating composition is provided which comprises a resinous binder and optionally diluent and pigment and other ingredients normally found in coating compositions, characterised in that the resinous binder comprises:

(A) a polyepoxide containing greater than 50 percent by weight of a diepoxide;

(B) a urethane-containing polyacid curing agent having on average more than three carboxylic acid groups per molecule and an acid equivalent weight less than 500 formed from reacting:

(i) a polyol component having at least three hydroxyl groups per molecule comprising an oligomeric ester having a number average molecular weight of no greater than 1000 and having on average more than three hydroxyl groups per molecule, said oligomeric ester is formed from reacting:

a) a linear aliphatic dicarboxylic acid or its functional equivalent thereof having greater than two carbon atoms between carboxyl groups with

b) an aliphatic polyol having at least three hydroxyl groups and containing from 3 to 12 carbon atoms,

(ii) a polyisocyanate, and

(iii) an anhydride of a polycarboxylic acid of which anhydride more than 50% by weight based on the total weight of anhydride is composed of a 1,2-anhydride of a cyclic dicarboxylic acid and in that the equivalent ratio of acid groups in (B) to epoxy groups in (A) is from 1.2 to 0.8:1 and is sufficient to form a cured product.

The coating composition can be used in a variety of applications but is particularly desirable for use as automotive topcoats, particularly clear coats in composite colour-clear coatings.

The principal ingredients in the coating compositions of the present invention are the polyepoxide and the polyacid curing agent.

Among the polyepoxides which are used in the practice of the invention are aliphatic polyepoxides, preferably those containing the cyclohexane oxide moiety. These polyepoxides are preferred because they have low viscosity, high cyclic contents, low molecular weights and high epoxy contents. These features in combination with one another provide for good physical and chemical properties in the resultant coating while enabling the formulation of high solids coating compositions with good cure response. The preferred polyepoxides are diepoxides, that is, having a 1,2-epoxy equivalency of two. At least 50, preferably at least 60 percent by weight based on weight of polyepoxide, are diepoxides.

Particularly preferred polyepoxides are 3,4-epoxycyclohexylmethyl 3,4-epoxycyclohexylcarboxylate.

2

Also, the diepoxides bis(3,4-epoxy-6-methylcyclohexylmethyl) adipate and bis(3,4-epoxycyclohexylmethyl) adipate can be used. These epoxides are commercially available from Union Carbide Corporation as ERL 4221, ERL 4289 and ERL 4299, respectively. Also, epoxies containing the cyclohexane moiety are described in U.S. Patents Nos. 2,890,194; 2,890,195; 2,890,196; 2,890,197; 2,890,210; 3,023,174 and 3,027,357.

Besides the polyepoxides based on the cyclohexane moiety, low molecular weight epoxy condensation polymers, that is, those having an average 1,2-epoxy equivalency of 2 to 2.5 (with the majority of the molecular species, i.e., greater than 50 percent by weight, having a functionality of 2) can be used. Examples of such epoxy condensation polymers are polyglycidyl ethers of aliphatic and cycloaliphatic alcohols and polyglycidyl esters of aliphatic and cycloaliphatic carboxylic acids. These diepoxides can be produced by etherification or esterification of a cycloaliphatic or aliphatic alcohol or acid with epihalohydrin such as epichlorohydrin in the presence of alkali. Also, etherification products with polyhydric phenols which are then subsequently hydrogenated may also be used. Examples of suitable alcohols and phenols are ethylene glycol; 1,2-propylene glycol; 1,2-cyclohexanedimethanol; 1,4-cyclohexanediol and hydrogenated bisphenol A. Examples of suitable carboxylic acids are adipic acid and hexahydrophthalic acid.

Preferably, the polyepoxides are aliphatic such that they will have good exterior durability. Where exterior durability is not a requirement, aromatic polyepoxides can be used.

The polyepoxides mentioned above have relatively low molecular weights, generally less than 1000, preferably less than 750, and more preferably less than 500 for the formulation of high solids coating compositions.

Optionally, an epoxy group-containing acrylic polymer can also be included in the polyepoxide component. These polyepoxides enhance hardness and cure response of the resultant coating.

Examples of suitable epoxy-containing acrylic polymers are copolymers having an ethylenically unsaturated monomer having at least one epoxy group such as glycidyl methacrylate and glycidyl acrylate with at least one polymerizable ethylenically unsaturated monomer which is free of epoxy groups such as alkyl esters of acrylic and methacrylic acid containing from 1 to 20 carbon atoms in the alkyl group. Examples of such monomers include methyl methacrylate, ethyl acrylate, butyl acrylate and butyl methacrylate. These polymers can be prepared by conventional free radical initiated organic solution polymerization techniques and have molecular weights between 700 and 20,000, more preferably 1000 to 10,000; the molecular weight being determined by gel permeation chromatography using a polystyrene standard.

Preferably, the polyepoxide is a mixture of the cyclohexane oxide moiety containing polyepoxides and the epoxy-containing acrylic polymer. The mixture provides the best blend of gloss, solids content and cure response.

The polyepoxide is usually present in the coating composition in amounts of about 20 to 75, preferably from 30 to 60 percent by weight based on total weight of resin solids. When the epoxy-containing acrylic polymer is used, it is present in amounts of up to 20, preferably 1 to 15 percent by weight based on weight of resin solids.

The urethane-containing polyacid curing agent contains on average more than three carboxylic acid groups per molecule which are reactive with the polyepoxide to form a crosslinked coating. Often the curing agent contains at least 30 weight percent of a material containing four carboxylic acid groups per molecule. The acid functionality is carboxylic acid which is formed by ring opening an anhydride of a polycarboxylic acid with a polyol component. Such high acid functionality (i.e., acid groups per mole) is needed for good cure response and the development of good physical and chemical properties in the resultant coating. Further, high acid values enable the use of more low viscosity polyepoxide resulting in low viscosity, high solids compositions with good flow and high gloss.

The polyol component has at least three hydroxyl groups per molecule and is preferably used in amounts of 20 to 70, more preferably 30 to 60 percent by weight based on total weight of polyol, polyisocyanate and anhydride used in making the urethane-containing polyacid curing agent. The polyol component is an oligomeric ester formed from reacting a linear aliphatic dicarboxylic acid or its functional equivalent thereof with an organic polyol having at least three hydroxyl groups. The oligomeric esters are preferred because one can tailor make the polyol to have high hydroxyl functionality necessary for the subsequent formation of high acid functionality while introducing linear aliphatic groups for flexibility in the coating. The oligomer being of relatively low molecular weight enables the formation of high solids coatings.

Among the linear aliphatic dicarboxylic acids which can be used in making the ester oligomer are those containing at least two, preferably greater than two carbon atoms between carboxyl groups such as succinic acid, glutaric acid, adipic acid, pimelic acid, suberic acid, azelaic acid, sebacic acid and dimeryl acid, including mixtures of such acids. Preferably, the linear aliphatic dicarboxylic acid contains at least six carbon atoms with adipic acid and sebacic acid being preferred. Also, equivalents of such dicarboxylic acids such as lower alkyl esters of the dicarboxylic acids as well as anhydrides of such dicarboxylic acids where they exist can also be used.

The organic polyol provides the hydroxyl functionality in the ester oligomer. Among the organic polyols which can be employed in making the ester oligomer are those containing at least three hydroxyl groups. Typically, these will be aliphatic polyols containing from 3 to 12 carbon atoms and specific examples include trimethylolpropane, ditrimethylolpropane, glycerol and pentaerythritol, including mixtures of such polyols. Minor amounts (i.e., less than 50 percent by weight based on total weight of organic polyol) of a diol such as ethylene glycol, propylene glycol and 1-(3-hydroxy-2,2-dimethylpropyl)-3-hydroxy-2,2-dimethylpropionate (ESTER DIOL 204) can be included with the organic polyol.

The oligomeric ester can be prepared by reacting a molar excess of the organic polyol with the linear aliphatic dicarboxylic acid while removing water during the condensation reaction and reacting to completion as evidenced by a low and essentially constant acid value. Typically, there will be at least 1.5 moles of organic polyol for each mole of linear aliphatic dicarboxylic acid. Preferably, there will be two moles or more of the organic polyol for each mole of dicarboxylic acid. Also, reaction can be conducted to less than completion such that there will be unreacted acid functionality. Such reaction products assist in cure. However, unreacted diacid may crystallize in storage.

The ester oligomer has a relatively low molecular weight, on average no greater than 1000, and preferably less than 750, on a number average basis.

Besides the hydroxyl-containing ester oligomer, the polyol component may also optionally include an additional polyol. Typically, these can be low molecular weight organic polyols such as those used in preparing the oligomeric ester or alternately low molecular weight diols such as ethylene glycol, propylene glycol, butylene glycol, 1,6-hexanediol and diethylene glycol. Also, polymeric polyols such as polyethylene glycol, polyoxytetramethylene glycol and poly(ethylene glycol adipate) can also be included in the polyol component. These optional polyols can be incorporated so as to modify the coating properties of the resultant coating composition. For example, the use of long chain glycols such as polyoxytetramethylene glycol increases the flexibility of the coating, whereas short chain polyols such as trimethylolpropane increase the hardness of the coating.

When these optional polyols are used, they are used in relatively minor amounts, i.e., less than 50 percent by weight based on total weight of polyol component.

To incorporate urethane moieties into the polyacid curing agent, the polyol component can be reacted with an organic polyisocyanate. Preferably, the polyisocyanate is used in amounts of 1 to 40, more preferably 5 to 20 percent by weight based on total weight of polyol, polyisocyanate and anhydride used in making the urethane-containing polyacid curing agent. The urethane moieties provide for hardness, durability and increase flexibility in the resultant coating. The polyisocyanate is preferably aliphatic, including alicyclic, both linear and alkyl-branched alicyclic, as well as a cycloaliphatic polyisocyanate. The aliphatic polyisocyanates provide for better durability and color stability in the resultant coating. Preferably, the polyisocyanate is an acyclic aliphatic polyisocyanate containing from 6 to 38 carbon atoms. Examples of suitable polyisocyanates include 1,4-tetramethylene diisocyanate, 1,6-hexamethylene diisocyanate, dimeryl diisocyanate, trimethylhexamethylene diisocyanate, isophorone diisocyanate and 4,4'-methylene-bis-(cyclohexyl isocyanate). As mentioned above, the polyacid curing agent contains a linear aliphatic moiety containing greater than two carbon atoms between carboxyl groups. Preferably, these moieties are introduced into the curing agent through the ester oligomer mentioned above. However, they can be introduced through the polyisocyanate, in which case, the polyol component does not have to contain the ester oligomer but rather can be based on a simple polyol such as trimethylolpropane, ditrimethylolpropane or pentaerythritol, including mixtures of such polyols.

The anhydride of the polycarboxylic acid which is reacted with the polyol component provides the acid functionality in the polyacid curing agent. Preferably, the anhydride is used in amounts of 20 to 70, more preferably 30 to 60 percent by weight based on total weight of polyol, polyisocyanate and anhydride used in preparing the urethane-containing polyacid curing agent. The anhydrides upon reaction with the polyol component provide acid groups which are very reactive with epoxy functionality and provide excellent cure response in the resultant coating. Preferably, all the anhydrides are 1,2-anhydrides of cyclic dicarboxylic acids. The cyclic moieties provide for hardness and durability in the coating and typically contain from 8 to 12 carbon atoms. Preferably, the cyclic moieties are cycloaliphatic to provide good exterior durability. Examples of suitable anhydrides include hexahydrophthalic anhydride and alkyl derivatives of hexahydrophthalic anhydride such as methylhexahydrophthalic anhydride. Mixtures of hexahydrophthalic and methylhexahydrophthalic anhydrides can also be used. Anhydrides of aromatic acids such as trimellitic anhydride can be used where good exterior durability is not required.

Optionally, a minor amount (i.e., less than 50, preferably no greater than 30 percent by weight based on

4

total weight of anhydrides) of a 1,2-anhydride of an acyclic dicarboxylic acid can be used. These materials will help to flexibilize the coating. Examples of such anhydrides include succinic anhydride, glutaric anhydride and dodecenyl succinic anhydride.

The anhydride of the polycarboxylic acid can be reacted with the polyol component in about a 1 to 1 molar ratio to form a hydroxyl and carboxylic acid group-containing half-ester which is then reacted with the organic polyisocyanate to form the urethane-containing polyacid curing agent. Alternately, the polyol component can be reacted with the organic polyisocyanate to form a polyurethane polyol and the polyurethane polyol reacted with the anhydride to form the urethane-containing polyacid curing agent. Also, the anhydride and the polyisocyanate can be reacted with the polyol in one step.

The 1,2-anhydride of the cyclic dicarboxylic acid and the polyol component or the polyurethane polyol are reacted together usually by adding one ingredient to the other slowly at the reaction temperature. Preferably, reaction is conducted in the presence of an inert atmosphere such as nitrogen and in the presence of organic solvent to dissolve the ingredients and/or to lower the viscosity of the reaction mixture. Examples of suitable solvents are ketones such as methyl amyl ketone, diisobutyl ketone and methyl isobutyl ketone; aromatic hydrocarbons such as toluene and xylene. The reaction temperature is usually no greater than 150°C., preferably less than 135°C., and usually within the range of 70-135°C., preferably 90-120°C. A catalyst such as an amine catalyst may optionally be used for the reaction. The time of the reaction can vary somewhat depending principally on the reaction temperature, usually reaction is conducted until an IR analysis indicates that all the anhydride functionality has been consumed. However, it should be appreciated that reaction can be conducted with excess anhydride such that there is free anhydride in the reaction mixture. Free anhydride may actually improve coating performance but is undesirable because of toxicity concerns.

The polyacid curing agents of the present invention are of relatively low molecular weight and more particularly the acid group equivalent weight is relatively low. Preferably, the acid group equivalent weight is less then 500, more preferably less then 400, and most preferably less than 350. Such low acid group equivalent weight in combination with a relatively high acid functionality enables the formation of high resin solids compositions which have excellent cure response and high cross-linking density.

The polyacid curing agent is usually present in the coating composition in amounts of about 25 to 75 and preferably 35 to 65 percent by weight based on total weight of resin solids.

The equivalent ratio of carboxylic acid groups to epoxy groups in the compositions of the present invention is adjusted so that there are about 1.2 to 0.8, preferably from 1.1 to 0.9 equivalents of carboxyl per equivalent of epoxy; and that the ratio is sufficient so as to form a cured or crosslinked composition as is evidenced by the resistance of the composition to organic solvent.

In addition, the equivalent ratio of isocyanate groups to hydroxyl groups in the polyol component is preferably less then 0.4, more preferably less then 0.3. The equivalent ratio of anhydride groups (anhydride being considered monofunctional) to hydroxyl groups in the polyol component is preferably greater then 0.6, more preferably greater than 0.7. The reaction product is free of isocyanate functionality and contains at least three carboxylic acid groups per molecule.

The polyepoxide-polyacid compositions of the present invention are liquid compositions and can be formulated into liquid high solids coating compositions; that is, the coating compositions contain greater then 40, preferably greater than 50 percent by weight resin solids. The solids content is determined by formulating the coating composition to a No. 4 Ford cup viscosity of 25-30 seconds at 76°F. (24°C.) and determining the solids content according to ASTM 515/85.

Besides the resinous ingredients, the other components of the coating compositions will be the organic solvent. The organic solvents typically used are those which are used in the preparation of the polyacid curing agent and include ketones such as methyl isobutyl ketone and methyl amyl ketone; as well as aromatic hydrocarbons such as xylene and toluene.

The compositions of the present invention will also preferably contain catalysts to accelerate the cure of the epoxy and acid groups. Examples of suitable catalysts are basic materials and include organic amines and quaternary ammonium compounds such as N,N-dimethyldodecylamine, pyridine, piperidine, dimethyl aniline, diethylenetriamine and tetramethylammonium acetate. When used, the amount of catalyst is typically from 0.1 to 8, preferably from 2 to 5 percent by weight, based on weight of resin solids.

Also, optional ingredients such as auxiliary curing agents such as aminoplasts, plasticizers, anti-oxidants, U.V. light stabilizers, flow control agents, surfactants and other formulating additives can be employed if desired. These materials are optional and are typically present in amounts of up to about 20 percent by weight based on weight of resin solids.

The above-described resinous components can be formulated into clear coating compositions or, alternately, they can be formulated with pigments to form paints. The pigments may be any of the conventional types comprising, for example, iron oxides, lead oxides, strontium chromate, carbon black, coal dust, titanium dioxide, talc, barium sulfate, as well as color pigments such as cadmium yellow, cadmium red, chromium yellow, and metallic pigments such as aluminum flake and metal oxide coated mica.

The pigment content of the paint is usually expressed as the pigment-to-resin weight ratio. In the practice of the invention, when the film-forming coating compositions of the present invention contain pigment, the pigment-to-resin weight ratios may be as high as 2:1 and for most pigmented coatings, are within the range of 0.05 to 1:1.

The coating compositions of the present invention can be applied to the substrate by any of the conventional coating techniques such as brushing, spraying, dipping or flowing, but it is preferred that spray applications be used since this gives the best appearance. Any of the known spraying techniques may be used such as compressed air spraying, airless spraying, electrostatic spraying and either manual or automatic methods.

After application of the coating composition to the substrate, the coated substrate is heated to cure the coating. In the curing operation, solvents are driven off and the epoxy-acid crosslinking mechanism is activated. The heating or curing operation is usually carried out at a temperature in the range of from 160-350°F. (71-177°C.) but if needed lower or higher temperatures may be used. The thickness of the coating is usually from about 1 to 5, preferably 1.2 to 3 mils.

Preferably, the compositions of the present invention are used to formulate clear coats for use in a color-plus-clear composite coating. In a color-plus-clear application, a composite coating is applied to a substrate. The process comprises applying to the substrate a pigmented or colored film-forming composition to form a basecoat and applying to the basecoat a second film-forming composition to form a transparent topcoat over the basecoat. The film-forming composition of the basecoat can be any of the compositions useful in coating applications, particularly automotive applications in which the color-plus-clear coatings are finding their most use. A film-forming composition conventionally comprises a resinous binder and a pigment to act as a colorant. Particularly useful resinous binders are acrylic polymers, polyesters including alkyds and polyurethanes. The resinous binder for the basecoat can be an organic solvent-based material such as those described in U.S. Patent No. 4,220,679, note column 2, line 24, continuing through column 4, line 40. Also, resinous binders such as described in U.S. Patent No. 4,540,766 can be used. Also, water-based coating compositions such as those described in U.S. Patent No. 4,403,003 and U.S. Patent No. 4,147,679 can also be used as the binder in the basecoat composition. The resinous binder for the basecoat can also be a polyepoxide-polyacid composition of the present invention.

The basecoat composition also contains pigments including metallic pigmentation to give a color. Examples of suitable pigmentations for the basecoat are described in the aforementioned U.S. Patents Nos. 4,220,679; 4,540,766; 4,403,003 and 4,147,679.

Optional ingredients in the basecoat composition are those which are well known in the art of formulating surface coatings and include surfactants, flow control agents, thixotropic agents, fillers, anti-gassing agents, organic co-solvents, catalysts and other customary auxiliaries. Examples of these materials and suitable amounts are described in the aforementioned U.S. Patents Nos. 4,220,679; 4,540,766; 4,403,003 and 4,147,679. The usual spray techniques and equipment for air spraying and electrostatic spraying and either manual or automatic methods can be used, but they are most often applied by spraying.

During application of the basecoat to the substrate, a film of the basecoat is formed on the substrate typically in a thickness of about 0.1 to 5 and preferably about 0.1 to 2 mils. After forming a film of the basecoat on the substrate, solvent, that is, organic solvent and/or water, is driven out of the basecoat film by heating or simply an air drying period before application of the clear coat. Preferably, the heating step if needed will only be that sufficient and for a short period of time to ensure that the clear topcoat composition can be applied to the basecoat without the former dissolving the basecoat composition, that is, "striking in". Suitable drying conditions will depend on the particular basecoat composition, on the ambient humidity with certain water-based compositions, but in general, a drying time of from about 1 to 5 minutes and a temperature of from about 800 to 175°F. (200 to 79°C.) will be adequate to ensure that the mixing of the two coats is minimized. At the same time, the basecoat film must be adequately wetted by the clear topcoat composition so that satisfactory intercoat adhesion can be obtained. Also, more than one application of basecoat and more than one application of topcoat may be applied to develop optimum appearance. Usually between coats, the previously applied basecoat or topcoat is flashed, that is, exposed to ambient conditions for about 1 to 20 minutes.

The clear topcoat composition is applied to the basecoat by any of the conventional coating techniques mentioned above, although spray applications are preferred. As mentioned above, the clear topcoat is applied to the basecoat via a wet-on-wet technique before the basecoat has been cured. The two coatings are then heated to conjointly harden both coating layers. Curing conditions such as described above can be used.

Although the coating compositions of the present invention have been described above mainly as clear coats in composite color plus clear coatings, particularly for use in automotive applications, it should be appreciated that the coating composition can also be used in general industrial applications for both interior and exterior applications as both a clear coat and as a color coat.

The invention will be further defined by reference to the following examples. Unless otherwise indicated, all parts are by weight.

Example 1

A polyacid curing agent was prepared as follows: A hydroxyl-containing ester oligomer prepared from trimethylolpropane and adipic acid (2:1 molar ratio) was first prepared. The hydroxyl-containing oligomer was reacted with methylhexahydrophthalic anhydride (1:2.56 molar ratio) to form a carboxyl and hydroxyl-containing polyester which was then chain extended with trimethylhexamethylene diisocyanate (TMDI).

The ester-containing oligomer was prepared as follows:

| Ingredients | Parts by Weight (in grams) |
|---|---|
| Trimethylolpropane | 5888 |
| Adipic acid | 3184 |
| Triphenyl phosphite | 6.8 |
| Toluene | 921 |

The trimethylolpropane, triphenyl phosphite and 10 grams of the toluene were charged to a reaction vessel equipped with a stirrer, addition funnel, Dean-Stark trap and a nitrogen purge and heated to 58°C. to start melting the trimethylolpropane. The adipic acid was then added and the reaction mixture heated under a nitrogen atmosphere to remove water through the Dean-Stark trap. At 190°C., toluene was added slowly to the reaction mixture to maintain the temperature and the water removal. The reaction mixture was maintained at reflux while removing water until an acid value of 14.8 was obtained. Additional toluene was added such that the reaction mixture had a solids content measured at 110°C. of 88.2 and a Gardner-Holdt viscosity of 87 seconds, an acid value of 11.5 and a hydroxyl value of 526.8.

The ester-containing oligomer prepared as described above was then reacted with methylhexahydrophthalic anhydride and TMDI as follows:

| Ingredients | Parts by Weight (in grams) | Resin Solids |
|---|---|---|
| Ester-containing oligomer | 7302 | 6440 |
| Toluene | 1740 | - |
| Methylhexahydrophthalic anhydride[1] | 7440 | 7440 |
| Methyl isobutyl ketone | 5495 | - |
| Dibutyltin dilaurate (catalyst) | 4.8 | - |
| TMDI | 1056 | 1056 |
| Methyl isobutyl ketone | 173 | - |
| TMDI | 352 | 352 |

[1]The methylhexahydrophthalic anhydride used in these examples was obtained from Milliken Chemicals as MILLDRIDE MHHPA which was indicated to be a 70/30 mixture of methylhexahydrophthalic anhydride and hexahydrophthalic anhydride.

The ester oligomer and the toluene were charged to a reaction vessel equipped with a stirrer, addition funnel, condenser and nitrogen purge and heated under a nitrogen atmosphere to 110°C. The methylhexahydrophthalic anhydride was added slowly while maintaining the reaction mixture at 110-116°C. The reaction mixture was held at between 110-116°C. until an IR analysis indicated that all the anhydride functionality was consumed, then the addition of the methyl isobutyl ketone was started followed by the addition of the dibutyltin dilaurate. The first portion of TMDI was added at a temperature of 65-68°C. The second portion of TMDI mixed with the second portion of methyl isobutyl ketone was added slowly at 65-68°C. until the desired viscosity was reached and all the isocyanate functionality was consumed as determined by an IR analysis. The reaction mixture had a solids content at 110°C. of 67.4, a viscosity of 29.1 stokes, an acid value of 114.3 and a hydroxyl value of 54.1. The polyacid had an acid equivalent weight of 330.8 at 100 percent solids.

The polyacid curing agent prepared as described above was formulated into a coating composition as follows:

| Additive Mix | | |
|---|---|---|
| Ingredients | Parts by Weight (in grams) | Resin Solids |
| Xylene | 30.0 | - |
| TINUVIN 328[1] | 3.0 | 3.0 |
| TINUVIN 292[2] | 1.0 | 1.0 |
| Polybutylacrylate[3] | 0.34 | 0.2 |
| ARMEEN DM-12D[4] | 4.0 | 4.0 |

[1]Substituted benzotriazole UV light stabilizer available from Ciba-Geigy Corporation.
[2]Bis(1,2,2,6,6-pentamethyl-4-piperidinyl)decanedioate available from Ciba-Geigy Corporation.
[3]Polybutylacrylate having a $M_w$ of about 10,000 and an $M_n$ of about 2400; 58.8 percent solids in xylene.
[4]N,N-dimethyldodecylamine catalyst available from Akzo Chemical.

The polyacid curing agent was combined with a polyepoxide and the additive mix as follows:

| Ingredients | Parts by Weight (in grams) | Resin Solids |
|---|---|---|
| Additive mix | 38.34 | 8.2 |
| Polyacid curing agent | 92.3 | 60.9 |
| ERL 4299[1] | 29.6 | 29.6 |
| Epoxy-containing acrylic polymer[2] | 15.8 | 9.5 |
| Xylene | 32.0 | - |

[1]Bis(3,4-epoxycyclohexylmethyl) adipate from Union Carbide Corporation.

[2]Epoxy group-containing acrylic polymer containing 40 percent by weight glycidyl methacrylate, 20 percent by weight methyl methacrylate, 20 percent by weight butyl acrylate and 20 percent by weight butyl methacrylate; the percentages by weight being based on total weight of monomers. The polymer had an $M_n$ of 1456 as determined by gel permeation chromatography using a polystyrene standard and had a solids content of 60 percent by weight in xylene.

The ingredients were mixed in the order indicated with low shear mixing to form the coating composition which had a solids content of 50.1 percent and a No. 4 Ford cup viscosity of 28.9 seconds.

Base Coat Composition

A silver metallic base coat composition was prepared from mixing together a polyester polyol, a polyurethane polyol, aluminum flake and other coating ingredients, as follows:

| Ingredients | Parts by Weight (in grams) | Solids |
|---|---|---|
| TINUVIN 328 | 2.0 | 2.0 |
| Hexyl acetate | 35.0 | - |
| Methanol | 6.0 | - |
| Polymeric microparticles[1] | 22.7 | 10.0 |
| Polyester polyol[2] | 11.1 | 10.0 |
| Polyurethane polyol[3] | 37.5 | 30.0 |
| RESIMINE 717[4] | 47.6 | 40.0 |
| Pigment paste[5] | 40.0 | 22.0 |
| Phosphated epoxy[6] | 1.5 | 0.3 |
| Hexyl acetate | 23.0 | - |

[1] Polymeric microparticles prepared in accordance with Example 2 of U.S. Patent No. 4,147,688 and diluted on a 1:1 volume basis with 2-hexoxyethanol.

[2] Polyester polyol prepared as generally described in Example A of U.S. Patent No. 4,410,688 with the exception that xylene was used in place of methyl amyl ketone. The polyester had an actual solids content of 78 percent, an acid value of 7.93 and a hydroxyl value of 271.23.

[3] Polyurethane polyol prepared as generally described in Example 1 of U.S. Patent No. 4,540,766. The polyurethane polyol had an actual solids content of 77.6 percent, an acid value of 5.52 and a hydroxyl value of 80.73.

[4] Aminoplast resin available from Monsanto Company.

[5] Pigment paste prepared by mixing together the following ingredients:

| Ingredients | Parts by Weight (in grams) | Resin Solids | Pigment Solids |
|---|---|---|---|
| Polyester polyol (as described above) | 27.8 | 25.0 | - |
| Hexyl acetate | 26.0 | - | - |
| Aluminum flake dispersed in mineral spirits | 46.2 | - | 30.0 |

[6] Hydrogenated diglycidyl ether of bisphenol A (epoxy equivalent = 240) reacted with phosphoric acid (1 mole phosphoric acid per equivalent of epoxy).

The ingredients were mixed together in the order indicated with low shear stirring to form the base coat composition which had a No. 4 Ford cup viscosity of 21.7 seconds and a solids content of 54.9 percent.

The clear coating composition was applied as a clear coat in a color-clear composite coating as follows: The silver metallic base coat was spray applied to a primed steel substrate and the base coat baked at 250°F. (121°C.) for 30 minutes. The base coat had a dry film thickness of 0.6 mil. The clear coat composition was spray applied to the previously cured base coat composition. The clear coat was cured at 121°C. for 30 minutes. The clear coat had a dry film thickness of 1.4 mils. The properties of the cured composite coating are reported in Table I below.

Example 2

A polyacid curing agent similar to that of Example 1 was prepared with the exception that the resin was modified with 5 percent by weight of a polyether diol. The polyacid was prepared from the following mixture of ingredients:

| Ingredients | Parts by Weight (in grams) |
|---|---|
| TERACOL 650[1] | 50 |
| Ester-containing oligomer as used in Example 1 | 294 |
| Toluene | 74 |
| Methylhexahydrophthalic anhydride | 317 |
| Methyl isobutyl ketone | 234 |
| TMDI | 62 |

[1]Poly(oxytetramethylene) glycol having a molecular weight of 650 available from E. I. DuPont de Nemours and Co.

The TERACOL 650, ester-containing oligomer and toluene were charged to a reaction vessel equipped with a stirrer, condenser, addition funnel and nitrogen purge and heated under a nitrogen atmosphere at 48°C. to form a clear, homogeneous mixture. The methylhexahydrophthalic anhydride was then added keeping the reaction temperature between 42-48°C. The methyl isobutyl ketone was then added followed by the addition of the TMDI at 35°C. The mixture was then heated to 110°C. and held at this temperature until an IR analysis showed that all the NCO and anhydride had reacted. The reaction product had an acid value of 107 (theoretical solids 67.3 percent) and a Gardner-Holdt viscosity of 26 seconds. The polyacid had an acid equivalent weight of 353.

The polyacid curing agent was formulated into a coating composition as follows:

| Ingredients | Parts by Weight (in grams) | Resin Solids |
|---|---|---|
| Additive mix as used in Example 1 | 38.34 | 8.2 |
| Polyacid curing agent | 96.0 | 64.3 |
| ERL 4299 | 35.7 | 35.7 |
| Xylene | 25.3 | - |

The ingredients were mixed in the order indicated with low shear mixing to form the coating composition which had a solids content of 53.4 percent and a No. 4 Ford cup viscosity of 28 seconds.

The coating composition was applied as a clear coating to a silver metallic base coat as described in Example 1 to form a composite color-clear coating. The properties of the cured coating are reported in Table I below.

Examples 3 and 4

10

A polyacid curing agent similar to that of Example 1 was prepared with the exception that a mixture of MILLDRIDE MHHPA and hexahydrophthalic anhydride was used in place of the methylhexahydrophthalic anhydride of Example 1. A hydroxyl-containing ester oligomer of TMP and adipic acid (2:1 molar ratio) was prepared as follows:

| Ingredients | Parts by Weight (in grams) |
|---|---|
| Trimethylolpropane | 10524 |
| Adipic acid | 5691 |
| Triphenyl phosphite | 12.2 |
| Toluene | 100 |

The trimethylolpropane, triphenyl phosphite and adipic acid were charged to a reaction vessel equipped with a stirrer, Dean-Stark trap, condenser and a nitrogen purge. The reaction mixture was heated to 190°C. while removing water through the Dean-Stark trap. The temperature of 190°C. was maintained by slowly adding toluene as needed until an acid value of 13.5 was obtained. The reaction mixture was then cooled and thinned with the toluene.

To 6326 grams of the ester oligomer was added 656 grams of toluene to give a resin which had a solids content at 110°C. of 82.3, a viscosity of 63.8 stokes, an acid value of 10.5 and a hydroxyl value of 536.2. The hydroxyl group-containing ester oligomer was then reacted with TMDI and a mixture of hexahydrophthalic anhydride and MILLDRIDE MHHPA as follows:

| Ingredients | Parts by Weight (in grams) | Resin Solids |
|---|---|---|
| Hydroxyl-containing ester oligomer | 630.6 | 567.5 |
| Toluene | 118 | - |
| TMDI solution[1] | 229 | 151 |
| Solvent blend[2] | 109 | - |
| MILLDRIDE MHHPA | 361.4 | 361.4 |
| Hexahydrophthalic anhydride | 331.2 | 331.2 |
| Methyl isobutyl ketone | 359 | - |
| Dibutyltin dilaurate | 1 | - |

[1] 66 percent solids TMDI in a solvent blend of 75/25 weight ratio methyl isobutyl ketone/toluene.
[2] 75/25 weight ratio of methyl isobutyl ketone/toluene.

The ester-containing oligomer and toluene were charged to a reaction vessel equipped with a stirrer, Dean-Stark trap, condenser, addition funnel and nitrogen purge and heated under a nitrogen atmosphere to reflux. Three ml. of water were removed through the Dean-Stark trap and when no further water was removed, the reaction mixture was cooled to 65°C. followed by the addition of the TMDI solution at a temperature of 65°C. About one hour after the completion of the TMDI addition, the dibutyltin dilaurate was added and the reaction mixture held at 66°C. for about 3 hours until an IR analysis showed that all the isocyanate had been reacted. The solvent blend was then added, the reaction mixture heated to 110°C. followed by the addition of the methylhexahydrophthalic anhydride and the hexahydrophthalic anhydride which were added as a mixture. After the anhydride addition, the reaction mixture was held at 110°C. until an IR analysis indicated that all the anhydride had reacted. The reaction mixture was then thinned with the methyl isobutyl ketone. The reaction mixture had a Gardner-Holdt viscosity of 69 seconds and an acid value of 117. The polyacid had an acid equivalent weight of 316.5 at 100 percent solids.

The polyacid curing agent was formulated into a coating composition by combining with a polyepoxide and various additives as follows:

| Additive Mix | | |
|---|---|---|
| Ingredients | Parts by Weight (in grams) | Resin Solids |
| Xylene | 15.0 | - |
| Methyl isobutyl ketone | 15.0 | - |
| TINUVIN 328 | 3.0 | 3.0 |
| TINUVIN 292 | 1.0 | 1.0 |
| Polybutylacrylate | 0.34 | 0.2 |
| ARMEEN DM-12D | 4.0 | 4.0 |

The ingredients were mixed in the order indicated with low shear mixing to form the additive mix. The polyacid curing agent was combined with a polyepoxide and the additive mix to form a first coating composition:

| Ingredients | Parts by Weight (in grams) | Resin Solids |
|---|---|---|
| Additive mix | 38.4 | 8.2 |
| Polyacid curing agent | 92.4 | 61.0 |
| ERL 4299 | 39.0 | 39.0 |
| Hexyl acetate | 34.7 | - |

The ingredients were mixed in the order indicated with low shear mixing to form a first coating composition (Example 3) which had a solids content of 51 percent and a No. 4 Ford cup viscosity of 28.4 seconds.

A second coating composition (Example 4) similar to the first was prepared but which also contained an epoxy-containing acrylic polymer. The coating composition was prepared from the following mixture of ingredients:

| Ingredients | Parts by Weight (in grams) | Resin Solids |
|---|---|---|
| Additive mix | 38.34 | 8.2 |
| Polyacid curing agent | 88.2 | 58.2 |
| Epoxy-containing acrylic polymer as used in Example 1 | 16.7 | 10.0 |
| ERL 4299 | 31.8 | 31.8 |
| Hexyl acetate | 32.0 | - |

The coating composition had a solids content of 50.3 percent and a No. 4 Ford cup viscosity of 28.9 seconds.

The two coating compositions described above were each applied as clear coats in a color-clear composite coating. In forming such coatings, the silver metallic base coat described in Example 1 was first applied to a primed steel substrate. The base coat was given a room temperature flash for 5 to 10 minutes. The clear coating compositions as described above were then applied to the base coats by hand spraying. The composite coating was then cured for 30 minutes at 121°C. The properties of the cured composite coatings are reported in Table I below.

Example 5

A polyacid curing agent was prepared from a mixture of a hydroxyl-containing polyurethane and two different hydroxyl-containing ester oligomers.

The hydroxyl-containing polyurethane was prepared from the following mixture of ingredients:

| Ingredients | Parts by Weight (in grams) |
|---|---|
| Trimethylolpropane | 1525.4 |
| Methyl isobutyl ketone | 760.6 |
| DESMODUR W[1] | 1514 |
| Dibutyltin dilaurate | 1.5 |

[1]4,4′-methylene-bis(cyclohexyl isocyanate) from Mobay Chemical Co.

The trimethylolpropane and the methyl isobutyl ketone were charged to a reaction vessel equipped with a stirrer, addition funnel, condenser and nitrogen purge and heated under a nitrogen atmosphere to 65°C. to form a clear, homogeneous reaction mixture. The dibutyltin dilaurate catalyst was added followed by the addition of the DESMODUR W while maintaining the reaction temperature at a temperature of 80-88°C. The reaction mixture was held at about 85°C. until an IR analysis indicated that all of the isocyanate groups had reacted.

Two hydroxyl-containing ester oligomers are described below. The first hydroxyl-containing ester oligomer was prepared from the following mixture of ingredients:

| Ingredients | Parts by Weight (in grams) |
|---|---|
| Trimethylolpropane | 998.7 |
| Ditrimethylolpropane | 1863.2 |
| Adipic acid | 1088.1 |
| Triphenyl phosphite | 2.3 |
| Toluene | 100 |
| CARDURA E[1] | 91.5 |

[1]Glycidyl ester of Versatic Acid from Shell Chemical Co.

The trimethylolpropane, ditrimethylolpropane, triphenyl phosphite and adipic acid were charged to a reaction vessel equipped with a stirrer, addition funnel, Dean-Stark trap, condenser and a nitrogen purge and heated under a nitrogen atmosphere to 190°C. with the removal of water through the Dean-Stark trap. The toluene was added slowly as needed to maintain the reaction at 190°C. Reaction was continued until an acid value of 6.05 was obtained. The reaction mixture was cooled to 120°C. followed by the addition of the CARDURA E and heating at 130°C. until an acid value of 1.71 was obtained. The reaction mixture had a solids content measured at 110°C. of 96 percent, an acid number of 1.65 and a hydroxyl value of 493.

The second ester-containing oligomer was prepared from the following mixture of ingredients:

| Ingredients | Parts by Weight (in grams) |
|---|---|
| Trimethylolpropane | 7861.4 |
| Adipic acid | 2138.2 |
| Toluene | 56.0 |
| Triphenyl phosphite | 6.0 |

The trimethylolpropane, triphenyl phosphite and adipic acid were charged to a reaction vessel equipped with a stirrer, Dean-Stark trap, condenser and nitrogen purge and heated to 188°C. with the removal of water through the Dean-Stark trap. Toluene was added slowly as needed to maintain the reaction temperature at 188°C. Reaction was continued until an acid value of 6.8 was obtained. The reaction mixture was thinned with additional toluene to a theoretical 90 percent solids content and was slowly cooled to room temperature. The reaction mixture had an acid value of 5.7, a Gardner-Holdt viscosity of 48 seconds and a hydroxyl value of 778 (90 percent solids).

A polyacid curing agent was prepared from the hydroxyl-containing polyurethane and the two hydroxyl-containing ester oligomers described above as follows:

| Ingredients | Parts by Weight (in grams) | Resin Solids |
|---|---|---|
| Hydroxyl-containing polyurethane | 62.5 | 50 |
| First hydroxyl-containing ester oligomer | 51.5 | 50 |
| Second hydroxyl-containing ester oligomer | 444.5 | 400 |
| Toluene | 106.5 | - |
| Methylhexahydrophthalic anhydride/hexahydrophthalic anhydride mixture[1] | 1370 | 1096 |
| Methyl isobutyl ketone | 237 | - |
| Toluene | 83 | - |
| ARMEEN DM-12D | 16 | 16 |

[1]2/1 weight ratio of MILLDRIDE MHHPA/hexahydrophthalic anhydride; 80 percent solids in methyl isobutyl ketone.

The hydroxyl-containing polyurethane and the two hydroxyl-containing ester oligomers along with the first portion of toluene were charged to a reaction vessel equipped with a stirrer, water condenser, addition funnel, nitrogen purge and Dean-Stark trap and heated to reflux to remove water through the Dean-Stark trap. After the removal of about 3.5 ml. of water, no further water evolved. The ARMEEN DM-12D was then added followed by the addition of the methylhexahydrophthalic anhydride and hexahydrophthalic anhydride solution over 0.5 hour at a temperature of 110°C. The reaction mixture was held at about 120°C. until an IR analysis indicated that all the anhydride had reacted. The reaction mixture was thinned with the additional toluene and methyl isobutyl ketone to form a 68 percent resin solids solution having a Gardner-Holdt viscosity of 52 seconds and an acid value of 162. The polyacid had an acid equivalent weight of 235.5.

The polyacid curing agent was formulated into a coating composition as follows:

| Ingredients | Parts by Weight (in grams) | Resin Solids |
|---|---|---|
| Xylene | 15.0 | - |
| Methyl isobutyl ketone | 15.0 | - |
| TINUVIN 328 | 3.0 | 3.0 |
| TINUVIN 292 | 1.0 | 1.0 |
| Polybutylacrylate | 0.34 | 0.2 |
| Polyacid curing agent | 75.07 | 51.05 |
| ARMEEN DM-12D | 4.0 | 4.0 |
| Epoxy group-containing acrylic polymer as used in Example 1 | 16.67 | 10.0 |
| ERL 4299 | 38.9 | 38.9 |
| Hexyl acetate | 2.0 | - |

The ingredients were mixed in the order indicated with low shear mixing to form the coating composition which had a solids content of 60.9 percent and a No. 4 Ford cup viscosity of 26.9 seconds. The coating composition was employed as a clear coat in a composite color-clear coating. In applying the coating, the silver metallic base coat as described in Example 1 was first applied to a primed steel substrate. The base coat was given a room temperature flash for 5 to 10 minutes and the clear coating composition was then spray applied. The composite coating was then baked for 30 minutes at 250°F. (121°C.). The properties of the resultantly cured composite coating are reported in Table I below.

Example 6

A polyacid curing agent similar to Example 1 was prepared with the exception that in addition to trimethylolpropane, ESTER DIOL 204 was also used in the preparation of the hydroxyl group-containing ester oligomer.

The hydroxyl group-containing ester oligomer was prepared as follows:

| Ingredients | Parts by Weight (in grams) |
| --- | --- |
| Trimethylolpropane | 2307.4 |
| Adipic acid | 1247.7 |
| ESTER DIOL 204[1] | 349.5 |
| Triphenyl phosphite | 2.9 |
| Toluene | 400 |

[1]ESTER DIOL 204 is 1-(3-hydroxy-2,2-dimethylpropyl)-3-hydroxy-2,2-dimethylpropionate available from Union Carbide Corporation.

The trimethylolpropane, adipic acid, ESTER DIOL 204, triphenyl phosphite and 10 grams of toluene were added to the reaction vessel equipped with a stirrer, Dean-Stark trap, condenser, addition funnel and nitrogen purge and heated under a nitrogen atmosphere to distillation temperature to remove the water through the Dean-Stark trap. When the reaction mixture reached a temperature of 190°C., the remaining portion of the toluene was slowly added to the reaction mixture to keep the distillation temperature below 190°C. The reaction was held at this temperature until an acid value of less than 5 was obtained. In total, about 315 milliliters of water was removed. The reaction mixture had a Gardner-Holdt viscosity of 64.5 seconds, a theoretical solids content of 90 percent, a hydroxyl value of 534 and an acid value of 4.3.

The hydroxyl group-containing ester oligomer was then reacted with methylhexahydrophthalic anhydride and TMDI as follows:

| Ingredients | Parts by Weight (in grams) | Resin Solids |
| --- | --- | --- |
| Hydroxyl-containing ester oligomer | 369.3 | 332.4 |
| Toluene | 97.1 | - |
| Methylhexahydrophthalic anhydride | 412.1 | 412.1 |
| Methyl isobutyl ketone | 188.8 | - |
| TMDI solution[1] | 16.7 | 11.7 |

[1]78.6 percent solution in methyl isobutyl ketone.

The hydroxyl-containing ester oligomer and toluene were charged to a reaction vessel equipped with a condenser, addition funnel, nitrogen purge and stirrer and heated to 110°C. The methylhexahydrophthalic anhydride was added while maintaining the reaction temperature between 110-115°C. The reaction mixture was held at this temperature until an IR analysis indicated that all of the anhydride functionality had been reacted. The reaction mixture was thinned with the methyl isobutyl ketone and the TMDI solution added dropwise while maintaining the reaction mixture at a temperature of 76°C. The reaction mixture was held at 70°C. until an IR analysis indicated that all of the isocyanate group had reacted. The reaction mixture was found to have a solids content measured at 110°C. of 72.3, a Gardner-Holdt viscosity of 27.1 seconds and an acid value of 136. The polyacid had an acid equivalent weight of 298.

The polyacid curing agent was combined with a polyepoxide and formulated into a coating composition as follows:

Base Mix

A base mix was formulated from the following mixture of ingredients:

| Ingredients | Parts by Weight (in grams) | Resin Solids |
|---|---|---|
| Xylene | 10.0 | - |
| Methyl isobutyl ketone | 20.0 | - |
| TINUVIN 328 | 3.0 | 3.0 |
| TINUVIN 292 | 1.0 | 1.0 |
| Polybutylacrylate | 0.34 | 0.2 |
| ARMEEN DM-12D | 4.0 | 4.0 |
| Epoxy-containing acrylic polymer of Example 1 | 15.2 | 9.1 |
| ERL 4299 | 32.6 | 32.6 |

The ingredients were mixed in the order indicated with low shear mixing to form the base coat composition.

The base mix was combined with the polyacid curing agent to form the coating composition as follows:

| Ingredients | Parts by Weight (in grams) | Resin Solids |
|---|---|---|
| Base mix | 86.1 | 45.9 |
| Polyacid curing agent | 83.3 | 58.3 |
| Xylene | 8.0 | - |

The ingredients were mixed in the order indicated with low shear mixing to form the coating composition which had a solids content of 58.7 percent and a No. 4 Ford cup viscosity of 25.6 seconds.

The coating composition was applied as a clear coat to a base coat to form a composite color plus clear coating. The composite coating was applied by first applying the silver metallic base coat as described in Example 1 to a primed steel substrate. The base coat was given a room temperature flash for 5 to 10 minutes. The clear coating composition was then spray applied to the base coat and the composite coating baked for 30 minutes at 250° F. (121° C.). The cured composite coating had the properties reported in Table I below.

Example 7

A polyacid curing agent was formed from condensing trimethylolpropane and ditrimethylolpropane with methylhexahydrophthalic anhydride and dimeryl diisocyanate as follows:

| Ingredients | Parts by Weight (in grams) |
|---|---|
| Trimethylolpropane | 134 |
| Ditrimethylolpropane | 250 |
| Methylhexahydrophthalic anhydride | 1008 |
| ARMEEN DM-12D | 3.5 |
| Methyl isobutyl ketone | 300 |
| Dimeryl diisocyanate | 330.0 |
| Methyl isobutyl ketone | 434.5 |

The trimethylolpropane, ditrimethylolpropane and methyl isobutyl ketone were charged to a reaction vessel equipped with a stirrer, addition funnel, condenser and nitrogen purge and heated to 110° C. to form a clear, pale yellow, homogeneous reaction mixture. The methylhexahydrophthalic anhydride was then added over a 0.5 hour period at a temperature of 120-140° C. The ARMEEN DM-12D catalyst was added and the reaction mixture held at 132° C. until an IR analysis indicated that essentially all the anhydride functionality was consumed. The dimeryl diisocyanate was then added to the reaction mixture at 110° C. and the reaction mixture held at this temperature until an IR analysis indicated that all of the isocyanate was consumed. The reaction mixture was thinned with the methyl isobutyl ketone to form a 72.1 percent solids solution. The reaction mixture had an acid value of 136.8 and a Gardner-Holdt viscosity of 55 seconds. The polyacid had an acid equivalent weight of 296.

The polyacid curing agent was formulated into a coating composition as follows:

16

Additive Mix

An additive mix was formulated from the following mixture of ingredients:

| Ingredients | Parts by Weight (in grams) | Resin Solids |
|---|---|---|
| Xylene | 15 | - |
| Methyl isobutyl ketone | 15.0 | - |
| TINUVIN 328 | 3.0 | 3.0 |
| TINUVIN 292 | 1.0 | 1.0 |
| Polybutyl acrylate | 0.34 | 0.2 |

The ingredients were mixed together in the order indicated with low shear mixing to form the additive mix composition.

The additive mix was combined with the polyacid curing agent and the polyepoxide as follows:

| Ingredients | Parts by Weight (in grams) | Solids |
|---|---|---|
| Additive mix | 34.34 | 4.2 |
| Polyacid curing agent | 80.9 | 56.6 |
| ARMEEN DM-12D | 4.0 | 4.0 |
| Epoxy-containing acrylic polymer of Example 1 | 16.67 | 10.0 |
| ERL-4299 | 33.4 | 33.4 |
| Hexyl acetate | 10.0 | - |

The ingredients were mixed together in the order indicated with low shear mixing to form the coating composition which had a solids content of 58.7 percent and a No. 4 Ford cup viscosity of 27 seconds.

The coating composition was applied as a clear coat to a base coat to form a composite color-plus-clear coating. The composite coating was applied by first spraying the silver metallic base coat as described in Example 1 to a primed steel substrate. The base coat was given a room temperature flash for 5-10 minutes. The clear coating composition was then spray applied to the base coat and the composite coating baked for 30 minutes at 250°F. (121°C.). The cured composite coating had the properties reported in Table I below.

17

EP 0 317 185 B1

Table I

| Example | Dry Film Thickness in mils Base/Clear | Adhesion[1] | Hardness[2] | 20° Gloss[3] | Humidity Resistance[4] | | Pencil Hardness[5] | Xylene Resistance[6] Pencil Hardness |
|---|---|---|---|---|---|---|---|---|
| | | | | | Adhesion | Appearance | | |
| 1 | 0.6/1.4 | 5 | 13.90 | - | 5 | excellent gloss retention | ND (not determined) | ND |
| 2 | 0.6/1.4 | 5 | 12.25 | - | 5 | excellent gloss retention | ND | ND |
| 3 | 0.7/1.4 | 5 | 14.00 | 85 | 5 | 20° gloss = 80 | H | 2B |
| 4 | 0.7/1.5 | 5 | 8.75 | 84 | 5 | 20° gloss = 80 | H | 2B |
| 5 | 0.7/2.1 | 5 | 10.10 | 87 | ND | ND | HB | 2B |
| 6 | 0.7/1.8 | 4+ | 11.8 | 84 | 4 | 20° gloss = 84 | H | 4B |
| 7 | 0.5/1.8 | 5 | 9.65 | 87 | ND | ND | HB | 2B |

[1] Crosshatch adhesion determined generally in accordance with the procedures of ASTM D-3359. The adhesion was rated 0-5 with 5 indicating excellent adhesion.

[2] Tukon hardness number determined by ASTM E-48.

[3] Measured with a 20 degree gloss meter manufactured by Gardner Instrument Co.

[4] Humidity resistance determined by using a coated substrate as the ceiling of a humidity chamber (QCT chamber) with the coating directed inwardly to the chamber. The chamber is heated to 140°F. (60°C.) and about a 2-inch (9 cm) level of water is located 3 to 5 inches below the coated panel (panel sloped). After being exposed for 18 hours in the humidity chamber, the adhesion and appearance of the coating were determined and compared with the original adhesion value and appearance before humidity testing.

[5] Pencil hardness is determined by taking a series of standard pencils of varying hardness with 6H being the hardest and 6B being the softest and scratching the coated panels with pencils of increasing hardness until the coating was etched away.

[6] The xylene resistance was determined by determining the pencil hardness after xylene spotting in which a drop of xylene is placed on the coating for three minutes and then wiped off.

Example 8

A polyacid curing agent similar to that of Example 1 was prepared with the exception that the resin was prepared with a mixture of adipic and sebacic acid instead of just the adipic acid. A polyester-containing oligomer was prepared from the following mixture of ingredients:

| Ingredients | Parts by Weight (in grams) |
|---|---|
| Trimethylolpropane | 2624 |
| Adipic acid | 1021 |
| Sebacic acid | 354 |
| Triphenyl phosphite | 4 |
| Toluene | 409 |

The trimethylolpropane, adipic acid, sebacic acid, triphenyl phosphite and 10 grams of toluene were charged to a reaction vessel equipped with a stirrer, addition funnel, Dean-Stark trap and nitrogen purge and heated to the distillation temperature to remove water through the Dean-Stark trap. At 190°C., toluene was added slowly to the reaction mixture to maintain the temperature and water removal. The reaction mixture was maintained at reflux while removing water until an acid value of 11.6 was obtained. Additional toluene was added such that the reaction mixture had a theoretical solids content of 90 percent. The final reaction mixture had an actual solids content measured at 110°C. of 88 percent, a hydroxyl value of 560.5, a Gardner-Holdt viscosity of 72 seconds and an acid value of 10.5.

The ester-containing oligomer prepared as described above was then reacted with methylhexahydrophthalic anhydride and TMDI as follows:

| Ingredients | Parts by Weight (in grams) | Resins Solids |
|---|---|---|
| Ester-containing oligomer | 500 | 450 |
| Methylhexahydrophthalic anhydride | 538 | 538 |
| Toluene | 124.5 | - |
| Methyl isobutyl ketone | 275 | - |
| TMDI | 60.0 | 60.0 |

The ester oligomer and toluene were charged to a reaction vessel equipped with a stirrer, addition funnel, condenser and nitrogen purge and heated under a nitrogen atmosphere to 110°C. The methylhexahydrophthalic anhydride was added slowly while maintaining the reaction mixture at 110-116°C. The reaction mixture was held at this temperature range until an IR analysis indicated that all the anhydride functionality was consumed. The reaction mixture was then thinned with the methyl isobutyl ketone. The TMDI was then added slowly and the reaction mixture held at 65-68°C. until all the isocyanate functionality was consumed as determined by an IR analysis. An additional 11 grams of methyl isobutyl ketone was added to thin the reaction mixture to a Gardner-Holdt viscosity of 32.5 seconds at a theoretical total solids content of 69.5 percent. The actual solids content measured at 110°C. was 67.7. The reaction mixture had an acid value of 124.1.

The polyacid curing agent prepared as described above was formulated into a coating composition as follows:

| Ingredients | Parts by Weight (in grams) | Resin Solids |
|---|---|---|
| Polyacid curing agent | 22.6 | 15.7 |
| EPONEX DRH-1510[1] | 12 | 12 |
| ARMEEN DM-12D | 1.2 | 1.2 |
| Methyl isobutyl ketone | 8.5 | - |

[1]Diglycidyl ether of hydrogenated bisphenol A available from Shell Chemical Co.

The ingredients were mixed together in the order indicated with low shear mixing to form the coating composition which had a solids content of 65 percent. The coating composition was drawn down over a steel panel and cured for 30 minutes at 280°F. (138°C.). The resultant film was hard, glossy and flexible and resistant to methyl ethyl ketone.

Example 9

A mixed polyacid curing agent was prepared from a mixture of a polyacid derived from an ester oligomer and a polyacid derived from a hydroxyl-containing polyurethane.

The hydroxyl-containing ester oligomer was prepared as generally described in Example 1. The ester-containing oligomer had a solids content measured at 110°C. of 86.2, a Gardner-Holdt viscosity of 83.5 seconds, an acid value of 10.5 and a hydroxyl value of 539.1.

The polyurethane polyol was prepared from the following mixture of ingredients:

| Ingredients | Parts by Weight (in grams) |
|---|---|
| TMDI | 840 |
| PCP-0230[1] | 2000 |
| Dibutyltin dilaurate | 2.8 |
| Methyl isobutyl ketone | 149.5 |

[1]Polycaprolactone diol available from Union Carbide Corporation.

The TMDI and methyl isobutyl ketone were charged to a reaction flask equipped with a stirrer, water condenser and nitrogen blanket. The dibutyltin dilaurate was added and the reaction mixture heated to 70°C. under a nitrogen atmosphere. The PCP-0230 was added slowly over about a one hour period while maintaining the reaction temperature at about 67-72°C. The reaction mixture was held at 70-75°C. for about 6 hours until an NCO equivalent weight of 632 was obtained. This product is an NCO prepolymer.

A polyacid curing agent was prepared as follows:

| Ingredients | Parts by Weight (in grams) | Solids |
|---|---|---|
| Hydroxyl-containing ester oligomer | 2141.6 | 1614.8 |
| Methyl isobutyl ketone | 208.9 | - |
| NCO-prepolymer | 602.1 | 572.0 |
| Methylhexahydrophthalic anhydride | 271.8 | 271.8 |
| Methyl isobutyl ketone | 84.7 | - |
| Toluene | 202.3 | - |

The hydroxyl-containing ester oligomer, first portion of methyl isobutyl ketone and the NCO-prepolymer were charged to a reaction vessel equipped with a stirrer, addition funnel and nitrogen blanket and heated under a nitrogen atmosphere to 60-70°C. to initiate an exotherm. The reaction temperature was held at about 68°C. until IR analysis indicated that all the NCO had reacted. The reaction mixture was then heated to 110°C. and the methylhexahydrophthalic anhydride added. The reaction mixture was held at 110-115°C. until an IR analysis indicated that all the anhydride had reacted. The reaction mixture was then thinned with the methyl isobutyl ketone and toluene to form a 70 percent theoretical solids solution. The reaction product had a Gardner-Holdt viscosity of 63 seconds and an acid value of 108. The polyacid had an acid equivalent weight of 364 at 100 percent solids.

The polyacid curing agent was formulated into a coating composition as follows:

| Ingredients | Parts by Weight (in grams) | Solids |
|---|---|---|
| Polyacid curing agent | 26 | 18.2 |
| DRH-1510 | 12 | 12 |
| ARMEEM DM-12D | 1.3 | 1.3 |
| Methyl isobutyl ketone | 8.7 | - |

The ingredients were mixed together in the order indicated with low shear mixing to form the coating composition which had a solids content of 65 percent. The coating composition was drawn down over steel panels and cured at 250°F. (121°C.) for 30 minutes. The cured film was glossy, hard, extremely flexible and resistant to methyl ethyl ketone.

### Example 10

The following example is similar to Example 1 with the exception that a mixture of methylhexahydrophthalic anhydride and succinic anhydride was used in place of the methylhexahydrophthalic anhydride alone. An ester-containing oligomer was prepared as generally described in Example 1. The ester oligomer had an acid value of 6.5, a hydroxyl value of 532.1 and a solids content of 87.4 percent. The ester-containing oligomer was then reacted with methylhexahydrophthalic anhydride, succinic anhydride and TMDI as follows:

| Ingredients | Parts by Weight (in grams) | Resin Solids |
|---|---|---|
| Ester-containing oligomer | 607.6 | 546.8 |
| Toluene | 144.8 | - |
| Methylhexahydrophthalic anhydride | 415 | 415 |
| Succinic anhydride | 121.1 | 121.1 |
| Methyl isobutyl ketone | 440.3 | - |
| Dibutyltin dilaurate | 0.4 | 0.4 |
| TMDI | 87.9 | 87.9 |
| Methyl isobutyl ketone | 34.3 | - |
| TMDI | 69.6 | 69.6 |

The ester oligomer and toluene were charged to a reaction vessel equipped with a stirrer, addition funnel, condenser and nitrogen purge and heated under a nitrogen atmosphere to 110°C. The succinic anhydride was added followed by the addition of the methylhexahydrophthalic anhydride while maintaining the reaction mixture between 110-117°C. The reaction mixture was held at this temperature range until an IR analysis indicated that all the anhydride functionality was consumed. Then addition of the methyl isobutyl ketone was started followed by the addition of the dibutyltin dilaurate. The first portion of TMDI was added at a temperature of 62-66°C. The second portion of the TMDI mixed with the second portion of methyl isobutyl ketone was added slowly at 66-69°C. until the desired viscosity was reached and all the isocyanate functionality was consumed as determined by an IR analysis. The reaction mixture had a solids content of 64.6 percent, a Gardner-Holdt viscosity of 41.1 seconds and an acid value of 100. The polyacid had an acid equivalent weight of 362.4.

The polyacid curing agent prepared as described above was formulated into a coating composition as follows:

| Ingredients | Parts by Weight (in grams) | Solids |
|---|---|---|
| Polyacid curing agent | 28.1 | 18.2 |
| DRH-1510 | 12 | 12 |
| ARMEEM DM-12D | 1.3 | 1.3 |
| Methyl isobutyl ketone | 5.5 | - |

The ingredients were mixed in the order indicated with low shear mixing to form a coating composition which had a solids content of 65 percent. The coating composition was drawn down over a steel panel and the coating cured at 250°F. (121°C.) for 30 minutes. The resultant cured coating was hard, very flexible and resistant to methyl ethyl ketone.

**Claims**

1. A coating composition which comprises a resinous binder and optionally diluent and pigment and other ingredients normally found in coating compositions, characterised in that the resinous binder comprises:

(A) a polyepoxide containing greater than 50 percent by weight of a diepoxide;

(B) a urethane-containing polyacid curing agent having on average more than three carboxylic acid groups per molecule and an acid equivalent weight less than 500 formed from reacting:

(i) a polyol component having at least three hydroxyl groups per molecule comprising an oligomeric ester having a number average molecular weight of no greater than 1000 and having on average more than three hydroxyl groups per molecule, said oligomeric ester is formed from reacting:

a) a linear aliphatic dicarboxylic acid or its functional equivalent thereof having greater than two carbon atoms between carboxyl groups with

22

EP 0 317 185 B1

b) an aliphatic polyol having at least three hydroxyl groups and containing from 3 to 12 carbon atoms,

(ii) a polyisocyanate, and

(iii) an anhydride of a polycarboxylic acid of which anhydride more than 50% by weight based on the total weight of anhydride is composed of a 1,2-anhydride of a cyclic dicarboxylic acid and in that the equivalent ratio of acid groups in (B) to epoxy groups in (A) is from 1.2 to 0.8:1 and is sufficient to form a cured product.

2. A composition as claimed in claim 1, characterised in that the diepoxide is selected from a cyclohexene oxide moiety containing diepoxides and diglycidyl ethers of cycloaliphatic polyols including mixtures thereof.

3. A composition as claimed in claim 1 or 2, characterised in that the composition contains an epoxy group-containing acrylic polymer.

4. A composition as claimed in any of claims 1 to 3, characterised in that the polyol component further comprises a polyether diol.

5. A composition as claimed in claim 4, characterised in that the polyether diol is poly(oxytetramethylene) diol.

6. A composition as claimed in claim 4, characterised in that the aliphatic dicarboxylic acid (A) or its functional equivalent thereof has at least six carbon atoms.

7. A composition as claimed in any of claims 1 to 6, characterised in that the polyisocyanate is an aliphatic diisocyanate.

8. A composition as claimed in claim 7, characterised in that the aliphatic diisocyanate contains a linear aliphatic moiety containing at least four carbon atoms.

9. A composition as claimed in any of claims 1 to 8, characterised in that the whole of the anhydride (iii) is a 1,2-anhydride of a cyclic dicarboxylic acid.

10. A composition as claimed in claim 9, characterised in that the cyclic dicarboxylic acid is a cycloaliphatic dicarboxylic acid.

11. A composition as claimed in claim 10, characterised in that the anhydride is selected from the class consisting of hexahydrophthalic anhydride and an alkyl-substituted hexahydrophthalic anhydride including mixtures thereof.

12. A composition as claimed in any of claims 1 to 11, in which the equivalent ratio of isocyanate groups in (ii) to hydroxyl groups in (i) is less than 0.4 and the equivalent ratio of anhydride groups in (iii) to hydroxyl groups in (i) is greater than 0.6; said reaction product being free of isocyanate functionality and containing at least three carboxylic acid groups per molecule.

13. A method for applying a composite coating to a substrate which comprises applying to the substrate a coloured film-forming composition to form a base coat and applying to the base coat a clear film-forming composition to form a transparent topcoat over the base coat, characterised in that the clear film-forming composition comprises the resinous binder defined in any of claims 1 to 12.

**Patentansprüche**

1. Beschichtungszusammensetzung, enthaltend einen harzartigen Binder und gegebenenfalls Verdünnungsmittel und Pigment und andere, in Beschichtungszusammensetzungen üblicherweise enthaltene Bestandteile,

**dadurch gekennzeichnet,**

daß der harzartige Binder enthält:

(A) ein Polyepoxid, das mehr als 50 Gew.-% eines Diepoxids enthält,

23

EP 0 317 185 B1

(B) eine Urethan enthaltende Polysäure als Härtungsmittel, die im Mittel mehr als drei Carbonsäuregruppen pro Molekül und ein Säureäquivalentgewicht kleiner als 500 aufweist, hergestellt durch Umsetzen:

(i) eines Polyolbestandteiles mit mindestens drei Hydroxylgruppen pro Molekül, enthaltend einen oligomeren Ester mit einem zahlenmittleren Molekulargewicht von nicht mehr als 1000 und mit im Mittel mehr als drei Hydroxylgruppen pro Molekül, wobei der oligomere Ester hergestellt ist durch Umsetzen von (a) einer linearen aliphatischen Dicarbonsäure oder ihren funktionellen Äquivalenten mit mehr als zwei Kohlenstoffatomen zwischen den Carboxylgruppen mit (b) einem aliphatischen Polyol mit mindestens drei Hydroxylgruppen, das von 3-12 Kohlenstoffatomen enthält,

(ii) eines Polyisocyanats und

(iii) einem Anhydrid einer Polycarbonsäure, wobei das Anhydrid mehr als 50 Gew.-%, bezogen auf das Gesamtgewicht Anhydrid, eines 1,2-Anhydrids einer cyclischen Dicarbonsäure aufweist und das Äquivalentverhältnis von Säuregruppen in (B) zu Epoxygruppen in (A) von 1,2-0,8:1 beträgt und ausreichend ist, um ein gehärtetes Produkt auszubilden.

2.  Zusammensetzung nach Anspruch 1,
    **dadurch gekennzeichnet,**
    daß das Diepoxid ausgewählt ist aus Cyclohexenoxidgruppen enthaltenden Diepoxiden und Diglycidylethern von cycloaliphatischen Polyolen und Mischungen derselben.

3.  Zusammensetzung nach Anspruch 1 oder 2,
    **dadurch gekennzeichnet,**
    daß die Zusammensetzung ein Epoxygruppen enthaltendes Acrylpolymer enthält.

4.  Zusammensetzung nach jedem der Ansprüche 1-3,
    **dadurch gekennzeichnet,**
    daß der Polyolbestandteil weiterhin ein Polyetherdiol enthält.

5.  Zusammensetzung nach Anspruch 4,
    **dadurch gekennzeichnet,**
    daß das Polyetherdiol Poly(oxytetramethylen)diol ist.

6.  Zusammensetzung nach Anspruch 4,
    **dadurch gekennzeichnet,**
    daß die aliphatische Dicarbonsäure (A) oder ihr funktionelles Äquivalent mindestens sechs Kohlenstoffatome aufweist.

7.  Zusammensetzung nach jedem der Ansprüche 1-6,
    **dadurch gekennzeichnet,**
    daß das Polyisocyanat ein aliphatisches Diisocyanat ist.

8.  Zusammensetzung nach Anspruch 7,
    **dadurch gekennzeichnet,**
    daß das aliphatische Diisocyanat eine lineare aliphatiche Gruppe mit mindestens vier Kohlenstoffatomen enthält.

9.  Zusammensetzung nach jedem der Ansprüche 1-8,
    **dadurch gekennzeichnet,**
    daß das gesamte Anhydrid (iii) ein 1,2-Anhydrid einer cyclischen Dicarbonsäure ist.

10. Zusammensetzung nach Anspruch 9,
    **dadurch gekennzeichnet,**
    daß die cyclische Dicarbonsäure eine cycloaliphatische Dicarbonsäure ist.

11. Zusammensetzung nach Anspruch 10,
    **dadurch gekennzeichnet,**
    daß das Anhydrid aus der aus Hexahydrophthalsäureanhydrid und alkylsubstituiertem Hexahydrophthalsäureanhydrid und Mischungen derselben bestehenden Klasse ausgewählt ist.

24

**12.** Zusammensetzung nach jedem der Ansprüche 1-11,
**dadurch gekennzeichnet,**
daß das Äquivalentverhältnis von Isocyanatgruppen in (ii) zu Hydroxylgruppen in (i) kleiner als 0,4 ist und das Äquivalentverhältnis von Anhydridgruppen in (iii) zu Hydroxylgruppen in (i) größer als 0,6 ist und das Reaktionsprodukt im wesentlichen frei von Isocyanatfunktionalität ist und mindestens drei Carbonsäuregruppen pro Molekül enthält.

**13.** Verfahren zum Aufbringen einer Verbundbeschichtung auf einen Träger durch Aufbringen einer farbigen, filmbildenden Zusammensetzung auf den Träger, um eine Grundbeschichtung auszubilden, und Aufbringen einer klaren, filmbildenden Zusammensetzung auf die Grundbeschichtung, um eine transparente Deckschicht über der Grundbeschichtung auszubilden,
**dadurch gekennzeichnet,**
daß die klare, filmbildende Zusammensetzung den harzförmigen Binder nach jedem der Ansprüche 1-12 enthält.

## Revendications

**1.** Composition de revêtement, qui comprend un liant résineux et, éventuellement, un diluant et un pigment, et d'autres ingrédients que l'on trouve normalement dans les compositions de revêtement, caractérisée en ce que le liant résineux comprend :
(A) un polyépoxyde contenant plus de 50% en poids d'un diépoxyde;
(B) un agent durcisseur polyacide à fonctions uréthanne possédant en moyenne plus de trois groupes acides carboxyliques par molécule et ayant un poids équivalent d'acide inférieur à 500, formé par réaction :
(i) d'un constituant polyol comportant au moins trois groupes hydroxyle par molécule, comprenant un ester oligomère ayant une masse moléculaire moyenne en nombre ne dépassant pas 1000 et possédant en moyenne plus de trois groupes hydroxyle par molécule, ledit ester oligomère étant formé par réaction entre :
a) un acide dicarboxylique aliphatique linéaire ou son équivalent fonctionnel, possédant plus de deux atomes de carbone entre les groupes carboxyle, et
b) un polyol aliphatique comportant au moins trois groupes hydroxyle et contenant de 3 à 12 atomes de carbone,
(ii) d'un polyisocyanate et
(iii) d'un anhydride d'un acide polycarboxylique, anhydride dont plus de 50% en poids, par rapport au poids total de l'anhydride, se compose d'un 1,2-anhydride d'un acide dicarboxylique cyclique, et en ce que le rapport d'équivalents des groupes acides de (B) aux groupes époxy de (A) est de 1,2 à 0,8:1 et est suffisant pour former un produit réticulé.

**2.** Composition selon la revendication 1, caractérisée en ce que le diépoxyde est choisi parmi des diépoxydes contenant un groupement oxyde de cyclohexène et des éthers diglycidyliques de polyols cycloaliphatiques, y compris leurs mélanges.

**3.** Composition selon la revendication 1 ou 2, caractérisée en ce que la composition contient un polymère acrylique contenant un groupe époxy.

**4.** Composition selon l'une quelconque des revendications 1 à 3, caractérisée en ce que le constituant polyol comprend en outre un polyétherdiol.

**5.** Composition selon la revendication 4, caractérisée en ce que le polyétherdiol est le poly-(oxytétraméthylène)diol.

**6.** Composition selon la revendication 4, caractérisée en ce que l'acide dicarboxylique aliphatique (A) ou son équivalent fonctionnel possède au moins six atomes de carbone.

**7.** Composition selon l'une quelconque des revendications 1 à 6, caractérisée en ce que le polyisocyanate est un diisocyanate aliphatique.

**8.** Composition selon la revendication 7, caractérisée en ce que le diisocyanate aliphatique contient un

EP 0 317 185 B1

groupement aliphatique linéaire contenant au moins quatre atomes de carbone.

9. Composition selon l'une quelconque des revendications 1 à 8, caractérisée en ce que la totalité de l'anhydride (iii) est un 1,2-anhydride d'un acide dicarboxylique cyclique.

10. Composition selon la revendication 9, caractérisée en ce que l'acide dicarboxylique cyclique est un acide dicarboxylique cycloaliphatique.

11. Composition selon la revendication 10, caractérisée en ce que l'anhydride est choisi dans la classe constituée par l'anhydride hexahydrophtalique et un anhydride hexahydrophtalique à substitution alkyle, y compris leurs mélanges.

12. Composition selon l'une quelconque des revendications 1 à 11, dans laquelle le rapport d'équivalents des groupes isocyanate de (ii) aux groupes hydroxyle de (i) est inférieur à 0,4 et le rapport d'équivalents des groupes anhydride de (iii) aux groupes hydroxyle de (i) est supérieur à 0,6; ledit produit de réaction ne contenant pas de fonctionnalité isocyanate et contenant au moins trois groupes acides carboxyliques par molécule.

13. Procédé d'application d'un revêtement composite sur un substrat, qui comprend l'application sur le substrat d'une composition filmogène colorée pour former une couche de base et l'application sur la couche de base d'une composition filmogène transparente pour former une couche de finition transparente sur la couche de base, caractérisé en ce que la composition filmogène transparente comprend le liant résineux défini dans l'une quelconque des revendications 1 à 12.

26